# EUROPEAN PATENT SPECIFICATION

(11) **EP 4 181 505 B1**
(45) Date of publication and mention of the grant of the patent: **23.04.2025**
(21) Application number: 21860389.2
(22) Date of filing: 24.08.2021
(51) Int. Cl.: H04L 65/1093, H04L 65/1089, H04L 65/401, H04L 65/403, H04N 7/15, H04N 21/4363

(54) **SCREEN SHARING METHOD AND APPARATUS, AND ELECTRONIC DEVICE**
VERFAHREN UND VORRICHTUNG ZUR GEMEINSAMEN BILDSCHIRMNUTZUNG UND ELEKTRONISCHE VORRICHTUNG
PROCÉDÉ ET APPAREIL DE PARTAGE D'ÉCRAN, ET DISPOSITIF ÉLECTRONIQUE

(30) Priority: 28.08.2020 CN 202010888923
(43) Date of publication of application: 17.05.2023
(73) Proprietor: BEIJING BYTEDANCE NETWORK TECHNOLOGY CO., LTD., Beijing 100041 (CN)
(72) Inventor: DAI, Weijia, Beijing 100190 (CN); YAN, Shaohua, Beijing 100190 (CN); CHENG, Pu, Beijing 100190 (CN); SHI, Yin, Beijing 100190 (CN); ZHANG, Yali, Beijing 100190 (CN); ZHANG, Yanshen, Beijing 100190 (CN); CHEN, Xiangxiang, Beijing 100190 (CN)
(74) Representative: Dentons UK and Middle East LLP
(86) International application number: PCT/CN2021/114330
(87) International publication number: WO 2022/042554

(56) References cited:
- CN-A- 105 991 962
- CN-A- 108 958 678
- CN-A- 109 788 236
- CN-A- 111 193 898
- CN-A- 111 240 614
- CN-A- 112 312 060
- US-A1- 2014 195 595
- US-A1- 2014 226 537
- US-A1- 2015 032 686
- US-A1- 2018 121 663
- US-A1- 2018 176 270

## Description

### FIELD

The present disclosure relates to the technical field of computer, and in particular to a screen sharing method, a screen sharing apparatus and an electronic device.

### BACKGROUND

Nowadays, users can join multimedia conferences. In some scenarios, a user can join a multimedia conference by using a terminal device installed with a multimedia conference application. The multimedia conference application may be an application that provides a multimedia conference service.

In the related art, screen sharing can be chieved among different terminal devices joining the same multimedia conference. US 2018/121663 discloses a screen sharing experience that involves a user sharing portions of their display screen with other users as part of a communication session. According to various embodiments, a user that is sharing their screen with other devices as part of a screen sharing experience can protect a portion of the screen from being shared by designating the portion as sharing protected. Thus, content from the identified portion of the user's screen is encrypted to prevent other devices that are unable to decrypt the content from viewing the content. According to one or more embodiments, a user can be designated as sharing privileged such that the user is permitted access to an encryption key to decrypt and view sharing protected as part of a screen sharing experience.

### SUMMARY

This summary is provided to introduce the idea in a simplified form. The idea will be described in detail in the following description. This summary is neither intended to identify key features or essential features of the claimed technical solution, nor intended to be used to limit the scope of the claimed technical solution.

A screen sharing method, a screen sharing apparatus and an electronic device are provided according to embodiments of the present disclosure, which realize screen sharing by combining local screen projection and multimedia conference.

In a first aspect, a screen sharing method is provided according to embodiments of the present disclosure. The method includes: sending, in response to detecting a screen sharing operation after paired with a target display device for screen projection, shared screen data via a server to a target participant device in a multimedia conference, to trigger the target participant device to display a shared screen based on the shared screen data, where the target participant device includes the target display device.

In a second aspect, a screen sharing apparatus is provided according to embodiments of the present disclosure. The apparatus includes: a first sending unit, configured to send, in response to detecting a screen sharing operation after paired with a target display device for screen projection, shared screen data via a server to a target participant device in a multimedia conference, to trigger the target participant device to display a shared screen based on the shared screen data, where the target participant device includes the target display device.

In a third aspect, a screen sharing system is provided according to embodiments of the present disclosure. The system includes a terminal device, a server, and a target participant device. The terminal device is configured to send, in response to detecting a screen sharing operation after paired with a target display device for screen projection, shared screen data via the server to the target participant device in a multimedia conference, where the target participant device includes the target display device. The target participant device is configured to display the shared screen based on the shared screen data.

In a fourth aspect, an electronic device is provided according to embodiments of the present disclosure, including one or more processors, and a storage device storing one or more programs. The one or more programs, when executed by the one or more processors, cause the one or more processors to perform the method according to the first aspect.

In a fifth aspect, a computer-readable medium storing a computer program is provided according to embodiments of the present disclosure. The computer program, when executed by a processor, causes the processor to perform the method according to any one of claims 1 to 11.

With the screen sharing method, screen sharing apparatus and electronic device provided by the embodiments of the present disclosure, a screen sharing operation may be detected. Further, after paired with the target display device for screen projection, in response to a detected screen sharing operation, shared screen data is sent via a server to the target participant device of the multimedia conference. Then, the target participant device displays the shared screen based on the shared screen data. In practice, the target participant device includes the target display device. In this way, the screen sharing is realized by combining local screen projection and a multimedia conference. Therefore, the screen can be shared with not only the local target display device, but also the remote participant device.

### BRIEF DESCRIPTION OF THE DRAWINGS

The above and other features, advantages and aspects of various embodiments of the present disclosure will become more clear when taken in conjunction with the accompanying drawings and with reference to the following detailed description. Throughout the drawings, the same or similar reference numbers refer to the same or similar elements. It should be understood that the drawings are schematic and that the units and elements are not necessarily drawn to scale.
Figure 1 is a flowchart of a screen sharing method according to an embodiment of the present disclosure;
Figure 2 is a flowchart of intiating a multimedia conference in a screen sharing method according to an embodiment of the present disclosure;
Figure 3 is a flowchart of joining a multimedia conference in a screen sharing method according to an embodiment of the present disclosure;;
Figure 4 is a flowchart of a screen sharing method according to another embodiment of the present disclosure;
Figure 5 is a sechematic structual diagram of a screen sharing apparatus according to an embodiment of the present disclosure;
Figure 6 is a sequential chart of a screen sharing system according to an embodiment of the present disclosure;
Figure 7 is a sechematic architecture diagram of a system for applying a screen sharing method according to an embodiment of the present disclosure; and
Figure 8 is a sechematic structual diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be embodied in various forms and should not be construed as being limited to the embodiments set forth herein. The embodiments are provided for a more thorough and complete understanding. It should be understood that the drawings and embodiments of the present disclosure are only provided as examples, and are not intended to limit the protection scope of the present disclosure.

It should be understood that the various steps described in the method embodiments of the present disclosure may be performed in different orders and/or in parallel. Furthermore, method embodiments may include additional steps and/or omit an illustrated step. The scope of the present disclosure is not limited in this regard.

As used herein, the terms "including" and "comprising" and variations thereof are non-exclusive, i.e., meaning "including but not limited to". The term "based on" means "at least partially based on". The term "an embodiment" means "at least one embodiment", the term "another embodiment" means "at least one another embodiment", and the term "some embodiments" means "at least some embodiments". Relevant definitions of other terms will be given in the description below.

It should be noted that concepts such as "first" and "second" mentioned in the present disclosure are only used to distinguish different devices, modules or units, and are not used to limit the order or interdependence of functions performed by these devices, modules or units.

It should be noted that the modifications of "a" and "a plurality" mentioned in the present disclosure are illustrative rather than restrictive, and those skilled in the art should understand that unless clearly indicated otherwise, they should be understood as "one or more".

The names of messages or information exchanged between multiple devices in the embodiments of the present disclosure are only for illustrative purposes, and are not intended to limit the scope of these messages or information.

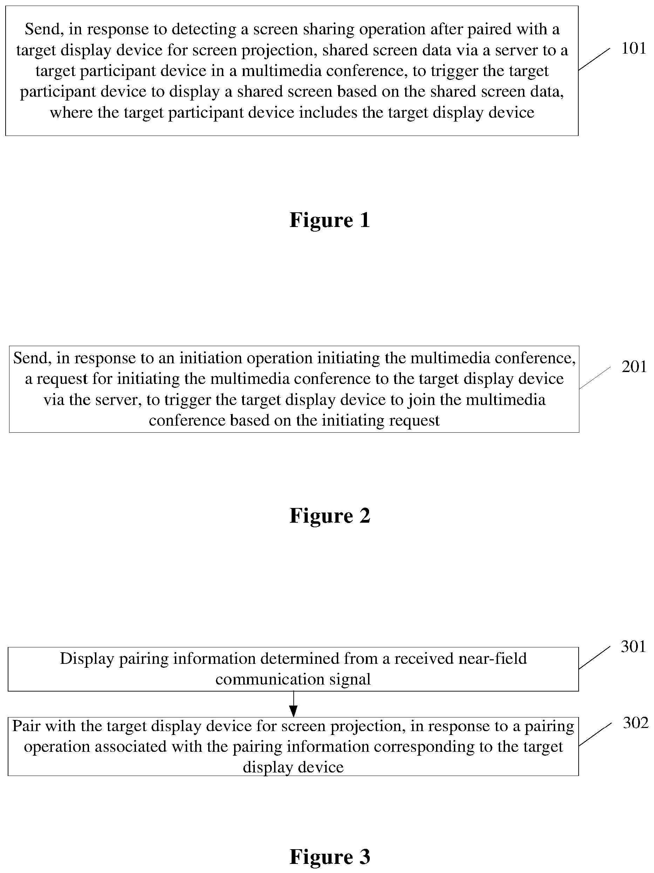

Figure 1 is a flowchart of a screen sharing method according to an embodiment of the present disclosure. As shown in Figure 1, the screen sharing method includes the following step 101.

In step 101, in response to detecting a screen sharing operation after paired with a target display device for screen projection, shared screen data is sent via a server to a target participant device in a multimedia conference, to trigger the target participant device to display a shared screen based on the shared screen data; where the target participant device includes the target display device.

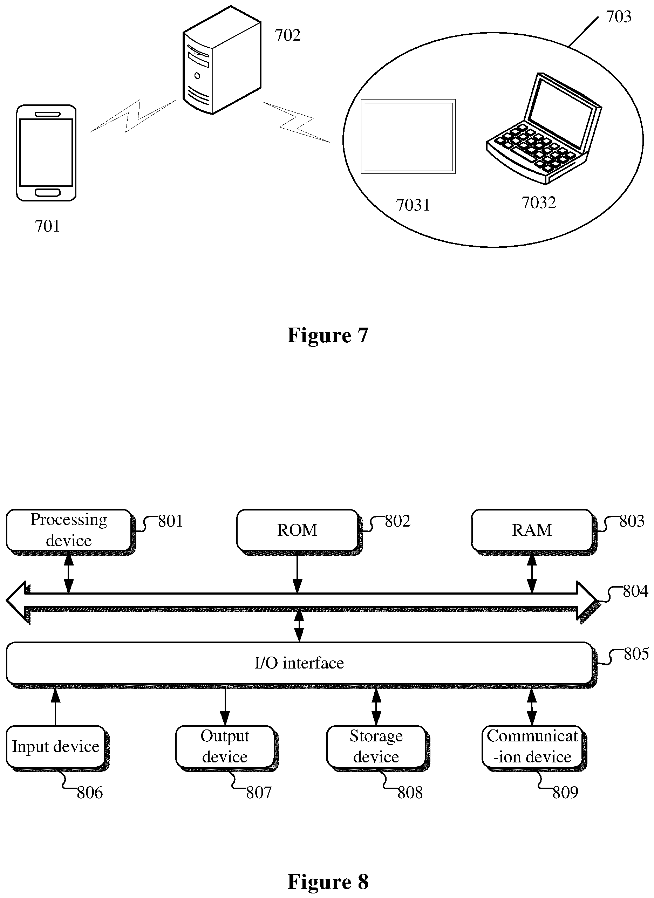

In this embodiment, after paired with the target display device for screen projection, the execution subject executing the screen sharing method (for example, the terminal device 701 shown in Figure 7) detects the screen sharing operation performed by a user.

The target display device may be a display device paired for screen projection with the execution subject. In practice, the pairing for screen projection may be a pairing for realizing local screen projection. In practice, the display device may be a device arranged in a conference room.

It is understood that the screen sharing operation may be any operation performed to share the screen with other devices. Here, the screen sharing operation can be understood as, for example, an operation initiated by a device to display the same content and/or interface as the device by a display screen of another display device and/or electronic device in a sharing range.

In some scenarios, the screen sharing operation may be a trigger operation performed by the user on a sharing control. Here, the shared control may be a control provided for sharing screen with other devices.

In some scenarios, the execution subject may detect, through a built-in detection program, the screen sharing operation performed by the user.

In this embodiment, in response to the detected screen sharing operation, the execution subject may send the shared screen data to the target participant device of the multimedia conference via a server (for example, the server 702 shown in Figure 7).

It is understood that the multimedia conference may be a multimedia conference that the executive subject participates in. That is, the executive subject may be a participant device of the multimedia conference. In practice, the multimedia conference may be an audio conference or a video conference.

The shared screen data may be data sent in order to share the screen with other devices.

The above target participant device may be a participant device that needs to receive the shared screen data. In some scenarios, the target participant device may be a participant device other than the execution subject.

The target participant device may include a target display device. It can be understood that the target display device may also be a participant device that needs to receive the shared screen data. It can also be understood that the multimedia conference may also be a conference attended by the target display device. That is, the target display device may also be a participant device of the multimedia conference.

As an example, the target participant device may include only the target display device (that is, the participating members of the multimedia conference only include the execution subject and the target display device). In this case, the execution subject may send the shared screen data to the target display device through the server, so that the target display device displays the shared screen. Thereby, the target display device paired for the local screen projection is used as a participating member of the multimedia conference, so as to share the screen with the execution subject.

As another example, the target participant device may include a target display device and another participant device (that is, the participating members of the multimedia conference include the execution subject, the target display device, and another participant device). In this case, the execution subject may send the shared screen data to the target display device and the other participant device via the server, so that the target display device and the other participant device can display the shared screen. Thereby, the target display device paired for the local screen projection and the other participant device remotely participating in the conference are used as conference members of the multimedia conference, so as to share the screen with the execution subject. Thereby, both the local screen sharing and the remote screen sharing can be achieved at the same time.

In some scenarios, in response to a detected screen sharing operation, the execution subject may send the shared screen data to the server. Further, in response to receiving the shared screen data, the server may send the shared screen data to the target participant device.

In this embodiment, in response to receiving the shared screen data, the target participant device may display the shared screen based on the shared screen data.

It is understood that the shared screen displayed by the target participant device may be the screen shared by the execution subject. Since the target participant device includes the target display device, after the execution subject is paired with the target display device for screen projection, the shared screen can be displayed on the target display device.

In the related art, in order to realize screen sharing, a user may join a multimedia conference by using a terminal device installed with a multimedia conference application. Screen sharing can be achieved among different terminal devices joining the same multimedia conference. In practice, the method of joining a multimedia conference through a terminal device installed with a multimedia conference application and sharing the screen in the multimedia conference may result in lower flexibility of screen sharing.

In this embodiment, after paired with the target display device for screen projection, a screen sharing operation performed by the user is detected. Further, in response to the detected screen sharing operation, shared screen data is sent via a server to the target participant device of the multimedia conference. Further, the target participant device displays the shared screen based on the shared screen data. Therefore, it can be realized that the present device shares the screen with the target participant device of the multimedia conference. In practice, the target participant device may include the target display device. Therefore, the target display device displays the shared screen based on the received shared screen data. In this way, the present device can share the screen with the target display device in a manner of combining local screen projection and a multimedia conference.

By combining local screen projection and a multimedia conference, the screen can be shared with not only the local target display device, but also the remote participant device. Thereby, the flexibility of screen sharing can be improved.

In some embodiments, the multimedia conference is initiated by the present device (ie, the execution subject) to the target display device.

In some scenarios, after paired with the target display device for screen projection, the present device (ie, the execution subject) may initiate the multimedia conference to the target display device.

Thus, the present device actively initiates a multimedia conference to the target display device, so that the present device and the target display device join the same multimedia conference.

In some embodiments, the present device (that is, the execution subject) may initiate the multimedia conference to the target display device through the process shown in Figure 2 . The process includes the following step 201.

In step 201, in response to an initiation operation initiating the multimedia conference, a request for initiating the multimedia conference is sent to the target display device via the server, to trigger the target display device to join the multimedia conference based on the initiating request.

The initiation operation may be an operation of initiating the multimedia conference to the target display device. In some scenarios, the initiation operation may be a triggering operation performed by the user on an initiating control. In practice, the initiating control may be a control for initiating the multimedia conference to the target display device.

In some scenarios, in response to the initiation operation initiating the multimedia conference, the execution subject may send an initiation request to the server. The initiating request may be a request for initiating the multimedia conference to the target display device. Further, the server may send to the target display device the initiation request of the multimedia conference. Then, the target display device may join the multimedia conference based on the received initiation request.

In some scenarios, in response to receiving the initiation request, the target display device may directly join the multimedia conference.

In other scenarios, the target display device may join the multimedia conference in a manner by which a to-be-participant device join the multimedia conference, which will be described later.

Thus, by initiating a multimedia conference to the target display device, the execution subject and the target display device can join the same multimedia conference. Further, after paired with the target display device for screen projection, the shared screen data may be sent to the target participant device via the server, so as to share screen with the target participant device.

In some embodiments, the present device (that is, the execution subject) may be paired for screen projection with the target display in the following manner.

In a first step, pairing information determined from a received near-field communication signal is displayed.

The near-field communication signal may be a signal broadcast by a display device. Optionally, the near-field communication signal may include at least one of the following: an ultrasonic signal, a Bluetooth signal, a wireless local area network signal, and the like.

In practice, the pairing information is carried in the near-field communication signal broadcast by the display device. The pairing information is used to pair a device with the display device for screen projection. Optionally, the pairing information may be a pairing code.

In some scenarios, in response to receiving the near-field communication signal broadcast by the display device, the execution subject may determine the pairing information carried in the near-field communication signal. Further, the execution subject may display the determined pairing information.

In practice, the above execution subject may receive a near-field communication signal broadcast by at least one display device.

In a second step, in response to a pairing operation associated with the pairing information corresponding to the target display device, pairing for screen projection with the target display device is performed.

The pairing operation may be an operation performed by the user in order to realize the pairing of the execution subject with the target display device. In some scenarios, the pairing operation may be a triggering operation performed by the user on a pairing control.

The pairing information corresponding to the target display device may be pairing information carried in the near-field communication signal broadcast by the target display device.

The display device may broadcast a near-field communication signal carrying pairing information. Further, the execution subject may determine the pairing information from the near-field communication signal broadcast by the display device, and display the pairing information. Then, if the user performs a pairing operation associated with pairing information corresponding to the target display device, the pairing for screen projection between the execution subject and the target display device is performed.

In some embodiments, the target display device joins the multimedia conference earlier than the present device.

The present device (that is, the execution subject) can join the multimedia conference through the process shown in Figure 3, which includes steps 301 and 302 described below.

In step 301, in response to receiving conference information of the multimedia conference sent by the server, joining prompt information for the multimedia conference is displayed, where the conference information is sent by the server to the present device in response to determining that the target display device and the present device are paired successfully.

The conference information may be information describing the multimedia conference. In practice, the above conference information may include at least one of: a conference name, user information of the initiating user, number of participants, and the like.

In practice, in response to determining that the target display device and the execution subject are successfully paired for screen projection, the server may send the conference information of the multimedia conference to the execution subject.

In some scenarios, after successfully pairing with the target display device for screen projection, the execution subject may send pairing result information to the server to indicate that the pairing is successful. Further, the server may determine, according to the pairing result information, that the target display device and the execution subject are successfully paired for screen projection.

The joining prompt information may be information used to prompt the user to join the multimedia conference.

In step 302, the present device joins the multimedia conference in response to an agree-to-join operation performed by the user based on the joining prompt information.

The agree-to-join operation may be an operation performed by the user in order to realize that the execution subject joins the multimedia conference.

In some scenarios, the joining prompt information may include an agree-to-join control. Here, the agree-to-join control may be used to indicate agreeing to join the multimedia conference. In response to the triggering operation performed by the user on the agree-to-join control, the execution subject may join the multimedia conference. It is understood that the agree-to-join operation may be a triggering operation performed by the user on the agree-to-join control.

Therefore, if the target display device joins the multimedia conference in advance, the present device may send the shared screen data to the target participant device of the multimedia conference via the server after joining the multimedia conference. Further, the target participant device may display the shared screen of the execution subject based on the received shared screen data. Therefore, after joining the multimedia conference that the target display device joins in advance, the present device can share the screen with the target participant device.

In some embodiments, the target participant device displays an input control for inputting call information based on the display of the shared screen. The call information is used to call a to-be-participant device to join the multimedia conference.

In some scenarios, in response to displaying the shared screen, the target participant device may display an input control.

In practice, the user of the target participant device can input call information in the input control.

In some scenarios, according to the call information inputted by the user of the target participant device, the shared screen of the execution subject may be shared with the to-be-participant device.

Specifically, in response to receiving the call information inputted by the user in the input control, the target participant device may send, via the server, a call request to the to-be-participant device indicated by the call information. Further, the to-be-participant device may join the multimedia conference based on the received call request. Then, in response to determining that the to-be-participant device already joins the multimedia conference, the server may send the shared screen data to the to-be-participant device. Thus, the to-be-participant device can display the shared screen of the execution subject based on the received shared screen data.

For details of sharing the screen of the execution subject with the to-be-participant device, reference may be made to the method described in step 302 of the embodiment shown in Figure 3, which will not be repeated here.

In some embodiments, the target participant device includes at least one of: a display device other than the target display device, and a terminal device that uses a multimedia conference application to join the multimedia conference.

The multimedia conference application may be an application that provides the multimedia conference.

In this way, the target participant device displays the shared screen, so that the screen can be shared with a display device other than the target display device. Thus, the present device can share the screen with a display device arranged in another conference room. In addition, the present device can share the screen with the terminal device that uses the multimedia conference application to join the multimedia conference.

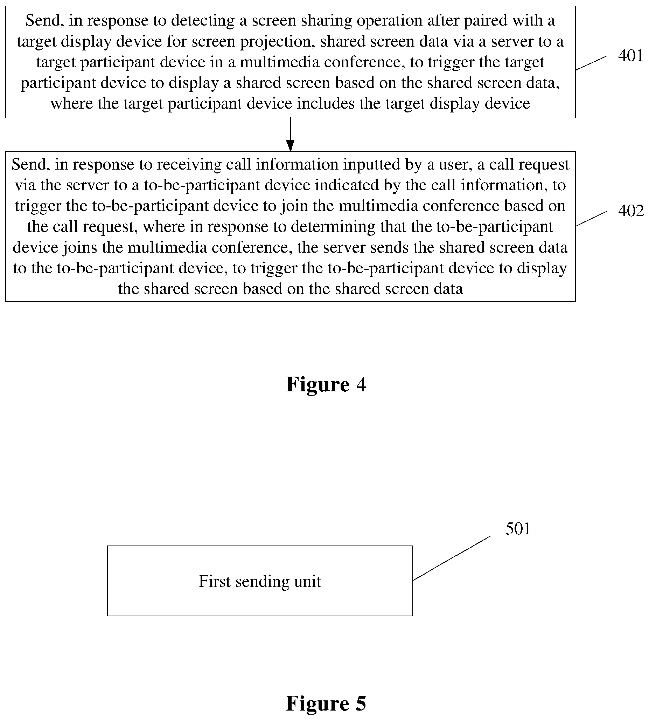

Reference is made to Figure 4, which is a flowchart of a screen sharing method according to another embodiment of the present disclosure. As shown in Figure 4, the screen sharing method includes the following steps 401 and 402.

In step 401, in response to detecting a screen sharing operation after paired with a target display device for screen projection, shared screen data is sent via a server to a target participant device in a multimedia conference, to trigger the target participant device to display a shared screen based on the shared screen data. The target participant device includes the target display device.

For details of step 401, reference may be made to step 101 of the embodiment shown in Figure 1, which is not repeated here.

In step 402, in response to receiving call information inputted by a user, a call request via the server to a to-be-participant device indicated by the call information, to trigger the to-be-participant device to join the multimedia conference based on the call request, where in response to determining that the to-be-participant device already joins the multimedia conference, the server sends the shared screen data to the to-be-participant device, to trigger the to-be-participant device to display the shared screen based on the shared screen data.

In this embodiment, the execution subject of the screen sharing method (for example, the terminal device 701 shown in Figure 7) may receive the call information inputted by the user.

The above call information is used to call the to-be-participant device to join the above multimedia conference.

In some scenarios, the execution subject may receive the call information inputted by means of voice.

In this embodiment, in response to receiving the call information inputted by the user, the execution subject may send, via a server (for example, the server 702 shown in Figure 7), a call request to the to-be-participant device indicated by the call information.

The call request may be a request for calling the to-be-participant device to join the multimedia conference.

In some scenarios, in response to receiving the call information inputted by the user, the execution subject may send the call information to the server. Further, the server may send the call request to the to-be-participant device indicated by the call information.

In this embodiment, the to-be-participant device may join the multimedia conference based on the received call request.

In some scenarios, in response to receiving the call request, the to-be-participant device may directly join the multimedia conference.

In this embodiment, in response to determining that the to-be-participant device already joins the multimedia conference, the server may send the shared screen data to the to-be-participant device.

In some scenarios, after the to-be-participant device already joins the multimedia conference, it may send information indicating that it already joins the multimedia conference to the server. Thus, the server can determine that the to-be-participant device already joins the multimedia conference according to the information.

In this embodiment, the to-be-participant device may display the shared screen based on the shared screen data sent by the server.

As an example, the target participant device includes only the target display device (that is, the participating members of the multimedia conference only include the execution subject and the target display device). In this case, according to the call information inputted by the user, more devices can be invited to participate in the multimedia conference. In this way, a small local conference can be changed to a large online conference.

In this embodiment, in response to receiving the call information inputted by the user, a call request is sent via the server to the to-be-participant device indicated by the call information. Further, the to-be-participant device joins the multimedia conference based on the call request. Then, in response to determining that the to-be-participant device already joins the multimedia conference, the server sends the shared screen data to the to-be-participant device. Finally, the to-be-participant device displays the shared screen based on the shared screen data. Therefore, more devices can be called to participate in the multimedia conference, and the screen can be shared with the devices that join the multimedia conference. As a result, the scope of screen sharing is extended.

In some embodiments, the call information is inputted by the user in the displayed input control.

The input control may be a control for inputting call information.

Therefore, after the execution subject displays the input control, the user may input call information through the input control.

In some embodiments, the call information includes at least one of: device calling information of the to-be-participant device, and contact calling information of a contact person of the to-be-participant device.

The device calling information may be information used to call the to-be-participant device. For example, the device calling information may be the calling number of the to-be-participant device.

The contact calling information may be information used to call the contact person of the to-be-participant device. For example, the contact calling information may be a phone number or an email address of the contact person.

Correspondingly, the input control includes at least one of: an input control for the contact calling information, and an input control for the device calling information.

In the following, the input control for the contact calling information is referred to as a first input control, and the input control for the device calling information is referred to as a second input control.

In this case, the user may input the contact calling information in the first input control, and may input the device calling information in the second input control.

In some embodiments, the to-be-participant device may join the multimedia conference by performing the following steps.

In a first step, a call interface is displayed in response to receiving a call request.

The call interface includes an agree-to-join control for agreeing to join the multimedia conference.

In a second step, in response to a triggering operation performed by the user on the agree-to-join control, the to-be-participant device joins the multimedia conference.

Therefore, if the user of the to-be-participant device performs a triggering operation on the agree-to-join control, the to-be-participant device can join the multimedia conference.

Referring to Figure 5, to implement the above methods, a screen sharing apparatus is provided according to an embodiment of the present disclosure. The apparatus embodiment corresponds to the method embodiment as shown in Figure 1, and may be applied in various electronic devices.

As shown in Figure 5, the screen sharing apparatus in this embodiment includes: a first sending unit 501. The first sending unit 501 is configured to send, in response to detecting a screen sharing operation after paired with a target display device for screen projection, shared screen data via a server to a target participant device in a multimedia conference, to trigger the target participant device to display a shared screen based on the shared screen data, where the target participant device includes the target display device..

In this embodiment, for details of the processing of the first sending unit 501 of the screen sharing device and the technical effect thereof, one may refer to the description of step 101 in the embodiment as shown Figure 1, which are not repeated here.

In some embodiments, the screen sharing apparatus may further include a second sending unit (not shown in the figure). The second sending unit is configured to send, in response to receiving call information inputted by a user, a call request via the server to a to-be-participant device indicated by the call information, to trigger the to-be-participant device to join the multimedia conference based on the call request. In response to determining that the to-be-participant device already joins the multimedia conference, the server sends the shared screen data to the to-be-participant device, to trigger the to-be-participant device to display the shared screen based on the shared screen data.

In some embodiments, the call information is inputted by the user through a displayed input control.

In some embodiments, the call information includes at least one of: device calling information of the to-be-participant device, and contact calling information of a contact person of the to-be-participant device. The input controls includes at least one of: an input control for the contact calling information, and an input control for the device calling information.

In some embodiments, the to-be-participant device joins the multimedia conference by: displaying a call interface in response to receiving the call request, where the call interface includes an agree-to-join control for agreeing to join the multimedia conference; and joining the multimedia conference in response to a triggering operation performed by the user on the agree-to-join control.

In some embodiments, the multimedia conference is initiated by a present device to the target display device.

In some embodiments, the screen sharing apparatus may further include an initiating unit (not shown in the figure). The initiating unit is configured to send, in response to an initiation operation initiating the multimedia conference, a request for initiating the multimedia conference to the target display device via the server, to trigger the target display device to join the multimedia conference based on the initiating request.

In some embodiments, the screen sharing apparatus may further include a pairing unit (not shown in the figure). The pairing unit is configured to: display pairing information determined from a received near-field communication signal, where the near-field communication signal is broadcast by a display device, and pair with the target display device for screen projection, in response to a pairing operation associated with the pairing information corresponding to the target display device.

In some embodiments, the target display device joins the multimedia conference earlier than the present device. The screen sharing apparatus may further include a joining unit (not shown in the figure). The joining unit is configured to: display joining prompt information for the multimedia conference, in response to receiving conference information of the multimedia conference sent by the server, where the conference information is sent by the server to the present device in response to determining that the target display device and the present device are successfully paired for screen projection; and join the multimedia conference in response to an agree-to-join operation performed by the user based on the joining prompt information.

In some embodiments, the target participant device displays, based on display of the shared screen, an input control for inputting call information, where the call information is used to call a to-be-participant device to join the multimedia conference.

In some embodiments, the target participant device includes at least one of: a display device other than the target display device, and a terminal device that joins the multimedia conference by using a multimedia conference application.

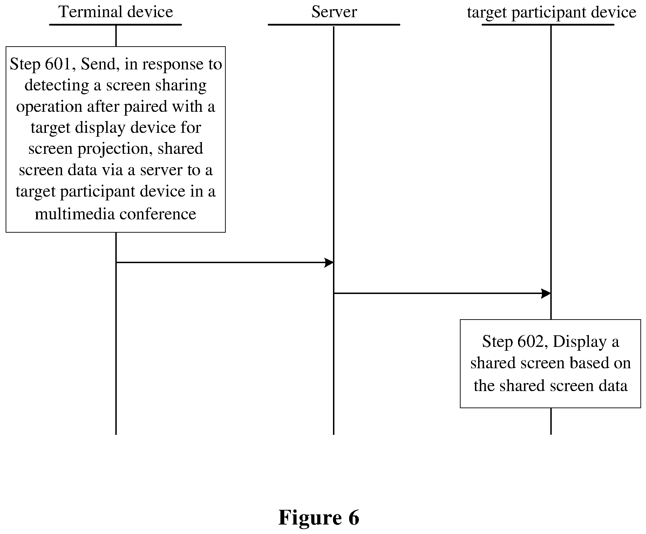

Figure 6 is a sequential chart of a screen sharing system according to an embodiment of the present disclosure. The screen sharing system includes a terminal device, a server and a target participant device. The interaction process between the terminal device, the server and the target participant device includes step 601 and step 602 as shown in Figure 6 .

In this embodiment, the target participant device may be a participant device of the multimedia conference in which the terminal device participates. The target participant device includes a target display device. It can be seen that the terminal device and the target display device may participate in the same multimedia conference.

In step 601, after the terminal device is paired with the target display device for screen projection, in response to detecting a screen sharing operation, the terminal device sends, via the server, shared screen data to the target participant device of the multimedia conference in which the terminal device participates.

Specifically, the terminal device may detect the screen sharing operation performed by the user. After paired with the target display device for screen projection, in response to the detected screen sharing operation performed by the user, the terminal device may send the shared screen data to the target participant device via the server.

In step 602, the target participant device displays the shared screen based on the shared screen data.

In this embodiment, the terminal device sends the shared screen data to the target participant device via the server, and the target participant device displays the shared screen of the terminal device based on the received shared screen data. Therefore, the terminal device can share the screen with the target participant device of the multimedia conference. In practice, the target participant device includes the target display device. Therefore, after paired with the target display device for screen projection, the target display device displays the shared screen of the terminal device based on the shared screen data. Therefore, the terminal device shares the screen with the target display device by way of screen projection.

In some embodiments, the terminal device, in response to receiving the call information inputted by the user, sends a call request via the server to the to-be-participant device indicated by the call information, so that the to-be-participant device joins the multimedia conference based on the call request. The server, in response to determining that the to-be-participant device already joins the multimedia conference, sends the shared screen data to the to-be-participant device, so that the to-be-participant device displays the shared screen based on the shared screen data.

Specifically, in response to receiving the call information inputted by the user, the terminal device may send a call request to the to-be-participant device indicated by the call information via the server. Further, the to-be-participant device may join the multimedia conference based on the received call request. Then, in response to determining that the to-be-participant device already joins the multimedia conference, the server may send the shared screen data of the terminal device to the to-be-participant device. Thus, the to-be-participant device can display the shared screen of the terminal device based on the received shared screen data.

In some embodiments, the multimedia conference is initiated by the terminal device to the target display device. The terminal device, in response to an initiation operation initiating a multimedia conference, sends a request for initiating the multimedia conference to the target display device via the server. The target display device joins the multimedia conference based on the initiating request.

Specifically, in response to the initiation operation initiating the multimedia conference, the terminal device may send the request for initiating the multimedia conference to the target display device via the server. Further, the target display device may join the multimedia conference based on the received initiation request.

In some embodiments, the target display device joins the multimedia conference earlier than the terminal device. The server sends conference information of the multimedia conference to the terminal device in response to determining that the target display device is successfully paired with the terminal device for screen projection. The terminal device, in response to receiving the conference information, displays joining prompt information for the multimedia conference, and joins the multimedia conference in response to an agree-to-join operation performed by the user based on the joining prompt information.

Specifically, in response to determining that the target display device is successfully paired with the terminal device for screen projection, the server may send the conference information of the multimedia conference to the terminal device. Further, in response to receiving the conference information, the terminal device may display the the joining prompt information for the multimedia conference. Then, in response to the agree-to-join operation performed by the user based on the joining prompt information, the terminal device joins the multimedia conference.

It should be noted that the interaction methods and the technical effects of the screen sharing system are all described in the embodiments of the screen sharing method, and will not be repeated here.

Figure 7 is a sechematic architecture diagram of a system for applying a screen sharing method according to an embodiment of the present disclosure.

As shown in Figure 7, the system may include a terminal device 701, a server 702, and a target participant device 703. The target participant device 703 may include a target display device 7031 and a terminal device 7032. The terminal device 701, the server 702 and the target participant device 703 communicate through a network. In practice, the network may be in various connections, such as wired or wireless communication links or fiber optic cables.

The terminal device 701 may interact with the target participant device 703 through the server 702. Various client applications may be installed on the terminal device 701. For example, the terminal device 701 may be installed with a multimedia conference application providing a multimedia conference service, a screen projection application providing a screen projection function, and the like.

In some scenarios, after paired with the target display device 7031 for screen projection, the terminal device 701 may send, in response to detecting a screen sharing operation, screen sharing data to the target participant device 703 via the server 702. Further, the target participant device 703 may display the shared screen of the terminal device 701 based on the received screen sharing data.

The terminal device 701 and the terminal device 7032 may be embodied in hardware or software. When the terminal device 701 and the terminal device 7032 are embodied in hardware, they may be various electronic devices having display screens and supporting information interaction functions, including but not limited to smart phones, tablet computers, laptop computers, and desktop computers. When the terminal device 701 and the terminal device 7032 are embodied in software, they may be installed in the electronic devices listed above, and can be implemented as multiple software or software modules, or a single software or software module, which is not limitted herein.

The target display device 7031 may be embodied in hardware or software. When the target display device 7031 is embodied in hardware, it may be various electronic devices having display screens and supporting screen projection functions. For example, the target display device 7031 may be a display device arranged in a conference room. When the target display device 7031 is embodied in software, it may be installed in the above electronic devices. The target display device 7031 may be implemented as multiple software or software modules, or a single software or software module, which is not limitted herein.

The server 702 may be a server that provides various services. In some scenarios, the server 702 may send the shared screen data of the terminal device 701 to the target participant device 703.

The server 702 may be embodied in hardware or software. When the server 702 is embodied in hardware, it may be implemented as a distributed server cluster composed of multiple servers, or may be implemented as a single server. When the server 702 is embodied in software, it may be implemented as multiple software or software modules (for example, multiple software or software modules for providing distributed services), or may be implemented as a single software or software module, which is not limitted herein.

It is noted that the screen sharing method provided by the embodiments of the present disclosure may be executed by the terminal device 701, and the screen sharing apparatus may be arranged in the terminal device 701.

It should be understood that the numbers of terminal devices, servers and target participant devices in Figure 7 are only illustrative. There may be any number of terminal devices, servers and target participant devices according to the implementation requirements.

Figure 8 shows a schematic structural diagram of an electronic device (such as the terminal device shown in Figure 7) suitable for implementing the embodiments of the present disclosure. Terminal devices in the embodiments of the present disclosure may include, but are not limited to, mobile terminals, such as mobile phones, notebook computers, digital broadcast receivers, PDAs (Personal Digital Assistants), PADs (Tablet computers), PMPs (Portable Multimedia Players), vehicle-mounted terminals (such as in-vehicle navigation terminals), and the like, and fixed terminals such as digital TVs, desktop computers, and the like. The electronic device shown in Figure 8 is only an example, and should not impose any limitation on the functions and applications of the embodiments of the present disclosure.

As shown in Figure 8, the electronic device may include a processing device (such as a central processing unit, a graphics processor) 801 that may execute various appropriate actions and processes according to a program stored in a read only memory (ROM) 802 or loaded into random access memory (RAM) 803 from a storage device 808. In the RAM 803, various programs and data necessary for the operation of the electronic device are also stored. The processing device 801, the ROM 802, and the RAM 803 are connected to each other through a bus 804. An input/output (I/O) interface 805 is also connected to the bus 804.

Normally, the following devices may be connected to the I/O interface 805: an input device 806 such as a touch screen, a touchpad, a keyboard, a mouse, a camera, a microphone, an accelerometer, a gyroscope and the like; an output device 807, such as a liquid crystal display (LCD), a speaker, a vibrator and the like; a storage device 808, such as a magnetic tape, a hard disk and the like; and a communication device 809. The communication device 809 may enable the electronic device to communicate in a wireless or wired manner with other devices to exchange data. Although Figure 8 shows the electronic device having various means, it should be understood that not all of the illustrated means are required to be implemented or provided. More or fewer devices may alternatively be implemented or provided. Each block shown in Figure 8 may represent one device or multiple devices as required.

In particular, according to embodiments of the present disclosure, the processes described above with reference to the flowcharts may be implemented as computer software programs. For example, embodiments of the present disclosure include a computer program product including a computer program carried on a non-transitory computer readable medium. The computer program includes program code for performing the method illustrated in the flowchart. In such an embodiment, the computer program may be downloaded and installed from the network via the communication device 809, or from the storage device 808, or from the ROM 802. When the computer program is executed by the processing device 801, the functions in the methods of the embodiments of the present disclosure are executed.

It should be noted that the computer-readable medium mentioned above in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus or device, or any combination thereof. More specific examples of computer readable storage media may include, but are not limited to, electrical connections with one or more wires, portable computer disks, hard disks, a random access memory (RAM), a read only memory (ROM), an erasable Programmable read only memory (EPROM or flash memory), a optical fiber, a portable compact disk read only memory (CD-ROM), optical storage devices, magnetic storage devices, or any suitable combination thereof. In this disclosure, a computer-readable storage medium may be any tangible medium that contains or stores a program that can be used by or in conjunction with an instruction execution system, apparatus or device. In the present disclosure, a computer-readable signal medium may include a data signal propagated in baseband or as part of a carrier wave with computer-readable program code embodied thereon. Such propagated data signals may be in a variety of forms, including but not limited to electromagnetic signals, optical signals, or any suitable combination thereof. A computer-readable signal medium can also be any computer-readable medium other than a computer-readable storage medium that can transmit, propagate, or transport the program for use by or in connection with the instruction execution system, apparatus or device. Program code stored on a computer readable medium may be transmitted using any suitable medium including, but not limited to, an electrical wire, an optical fiber cable, RF (radio frequency), or any suitable combination thereof.

In some embodiments, the client and server may use any currently known or future network protocol such as HTTP (HyperText Transfer Protocol) to communicate, and may be connected with digital data network in any form or medium (such as a communication network). Examples of communication networks include local area networks (LAN), wide area networks (WAN), the Internet (eg, the Internet), and peer-to-peer networks (such as ad hoc peer-to-peer networks), as well as any current or future network.

The computer-readable medium may be included in the multimedia conference device, or may exist alone without being assembled into the multimedia conference device. The computer-readable medium carries one or more programs. The one or more programs, when being executed by the multimedia conference device, cause the multimedia conference device to send, in response to detecting a screen sharing operation after paired with a target display device for screen projection, shared screen data via a server to a target participant device in a multimedia conference, to trigger the target participant device to display a shared screen based on the shared screen data, where the target participant device includes the target display device.

Computer program code for performing operations of the present disclosure may be written in one or more programming languages, including but not limited to object-oriented programming languages,such as Java, Smalltalk, C++, and conventional procedural programming languages, such as the "C" language or similar programming languages. The program code may be executed entirely on a user computer, or partly on a user computer, or as a stand-alone software package, or partly on a user computer and partly on a remote computer, or entirely on a remote computer or server. In the case of using a remote computer, the remote computer may be connected to the user's computer through any kind of network, including a local area network (LAN) or a wide area network (WAN), or may be connected to an external computer (eg, using Internet connection provided by an Internet service provider).

The flowcharts and block diagrams in the Figures illustrate the architecture, functionality, and operations of possible implementations of systems, methods and computer program products according to various embodiments of the present disclosure. In this regard, each block in the flowcharts or block diagrams may represent a module, program segment, or a portion of code that contains one or more executable instructions for implementing the specified logical functions. It should also be noted that, in some alternative implementations, the functions noted in the blocks may occur in an order other than the order shown in the figures. For example, two blocks shown in succession may be executed substantially concurrently, or the blocks may sometimes be executed in the reverse order, depending upon the functionality involved. It is also noted that each block of the block diagrams and/or flowchart illustrations, and combinations of blocks in the block diagrams and/or flowchart illustrations, may be implemented in dedicated hardware-based systems that perform the specified functions or operations, or may be implemented by a combination of dedicated hardware and computer instructions.

The units involved in the embodiments of the present disclosure may be implemented in a software manner, or in a hardware manner. The name of the unit does not constitute a limitation of the unit under any circumstances. For example, the first sending unit may be described as a unit that sends, in response to detecting a screen sharing operation after paired with a target display device for screen projection, shared screen data via a server to a target participant device in a multimedia conference.

The functions described above may be performed, at least in part, by one or more hardware logic components. For example, without limitation, examples of hardware logic components that may be used include: a Field Programmable Gate Array (FPGA), a Application Specific Integrated Circuit (ASIC), an Application Specific Standard Product (ASSP), a System on Chip (SOC), a Complex Programmable Logical Device (CPLD) and the like.

In the present disclosure, a machine-readable medium may be a tangible medium that may contain or store a program for use by or in connection with the instruction execution system, apparatus or device. The machine-readable medium may be a machine-readable signal medium or a machine-readable storage medium. Machine-readable media may include, but are not limited to, electronic, magnetic, optical, electromagnetic, infrared, or semiconductor systems, devices, or devices, or any suitable combination thereof. More specific examples of machine-readable storage media include one or more wire-based electrical connections, portable computer disks, hard disks, random access memory (RAM), read only memory (ROM), erasable programmable read only memory (EPROM or flash memory), fiber optics, compact disk read only memory (CD-ROM), optical storage devices, magnetic storage devices, or any suitable combination thereof.

While the disclosure has been shown and described with reference to various embodiments thereof, it will be understood by those skilled in the art that various changes in form and details may be made therein without departing from the scope of the disclosure as defined by the appended claims.

## Claims

1. A screen sharing method, the method is performed by a terminal, the method comprising:
pairing with a target display device for screen projection;
in response to detecting a screen sharing operation, sending (601) , shared screen data via a server to a target participant device in a multimedia conference;
wherein the target participant device displays a shared screen based on the shared screen data, wherein the target participant device comprises the target display device (602) ;
sending (402), in response to receiving call information inputted by a user, a call request via the server to a to-be-participant device indicated by the call information, to trigger the to-be-participant device to join the multimedia conference based on the call request,
wherein in response to determining that the to-be-participant device already joins the multimedia conference, the server sends the shared screen data to the to-be-participant device, to trigger the to-be-participant device to display the shared screen based on the shared screen data.

2. The method according to claim 1, wherein the call information is inputted by the user through a displayed input control.

3. The method according to claim 2, wherein
the call information comprises at least one of: device calling information of the to-be-participant device, and contact calling information of a contact person of the to-be-participant device; and
the input controls comprises at least one of: an input control for the contact calling information, and an input control for the device calling information.

4. The method according to claim 1, wherein the to-be-participant device joins the multimedia conference by:
displaying a call interface in response to receiving the call request, wherein the call interface includes an agree-to-join control for agreeing to join the multimedia conference; and
joining the multimedia conference in response to a triggering operation performed by the user on the agree-to-join control.

5. The method according to claim 1, wherein the multimedia conference is initiated to the target display device by a present device that performs the method.

6. The method according to claim 5, wherein the present device initiates the multimedia conference to the target display device by:
sending, in response to an initiation operation initiating the multimedia conference, a request for initiating the multimedia conference to the target display device via the server, to trigger the target display device to join the multimedia conference based on the initiating request.

7. The method according to claim 1, wherein a present device that performs the method is paired with the target display device for screen projection by:
displaying pairing information determined from a received near-field communication signal, wherein the near-field communication signal is broadcast by a display device, and the pairing information is used for pairing with the display device for screen projection; and
pairing with the target display device for screen projection, in response to a pairing operation associated with the pairing information corresponding to the target display device.

8. The method according to claim 1, wherein the target display device joins the multimedia conference earlier than a present device that performs the method; and
the present device joins the multimedia conference by:
displaying joining prompt information for the multimedia conference in response to receiving conference information of the multimedia conference sent by the server, wherein the conference information is sent by the server to the present device in response to determining that the target display device and the present device are successfully paired for screen projection; and
joining the multimedia conference in response to an agree-to-join operation performed by a user based on the joining prompt information.

9. The method according to claim 1, wherein the target participant device displays, based on display of the shared screen, an input control for inputting call information, wherein the call information is used to call a to-be-participant device to join the multimedia conference.

10. The method according to any one of claims 1 to 9, wherein the target participant device comprises at least one of:
a display device other than the target display device; and
a terminal device that joins the multimedia conference by using a multimedia conference application.

11. A screen sharing system, comprising:
a terminal device,
a server, and
a target participant device,
wherein the terminal device is configured to pair with a target display device for screen projection; in response to detecting a screen sharing operation , send, shared screen data via a server to a target participant device in a multimedia conference; and
wherein the target participant device is configured to display the shared screen based on the shared screen data;
the terminal device is configured to send, in response to receiving call information inputted by a user, a call request via the server to a to-be-participant device indicated by the call information, to trigger the to-be-participant device to join the multimedia conference based on the call request; and
the server is configured to send, in response to determining that the to-be-participant device already joins the multimedia conference, the shared screen data to the to-be-participant device, to trigger the to-be-participant device to display the shared screen based on the shared screen data.

12. The system according to claim 11, wherein the multimedia conference is initiated by the terminal device to the target display device;
the terminal device is configured to send, in response to an initiation operation initiating the multimedia conference, a request for initiating the multimedia conference to the target display device via the server; and
the target display device is configured to join the multimedia conference based on the initiation request, or,
wherein the target display device joins the multimedia conference earlier than the terminal device;
the server is configured send conference information of the multimedia conference to the terminal device in response to determining that the target display device and the terminal device are successfully paired for screen projection; and
the terminal device is configured to display joining prompt information for the multimedia conference in response to receiving the conference information, and join the multimedia conference in response to an agree-to-join operation performed by a user based on the joining prompt information.

13. A computer-readable medium storing a computer program, wherein the computer program, when executed by a processor, causes the processor to perform the method according to any one of claims 1 to 10.

## Patentansprüche

1. Bildschirmfreigabeverfahren, wobei das Verfahren von einem Endgerät durchgeführt wird, wobei das Verfahren umfasst:
Koppeln mit einer Zielanzeigevorrichtung für die Bildschirmprojektion;
in Reaktion auf das Erkennen einer Bildschirmfreigabeoperation, Senden (601) von freigegebenen Bildschirmdaten über einen Server an eine Zielteilnehmervorrichtung an einer Multimediakonferenz;
wobei die Zielteilnehmervorrichtung einen freigegebenen Bildschirm auf Basis der freigegebenen Bildschirmdaten anzeigt, wobei die Zielteilnehmervorrichtung die Zielanzeigevorrichtung (602) umfasst;
Senden (402), in Reaktion auf das Empfangen von Anrufinformationen, die von einem Benutzer eingegeben werden, einer Anrufanforderung über den Server an eine als Teilnehmer vorgesehene Vorrichtung, die von den Anrufinformationen angegeben wird, um die als Teilnehmer vorgesehene Vorrichtung dazu zu veranlassen, der Multimediakonferenz auf Basis der Anrufanforderung beizutreten,
wobei der Server in Reaktion auf das Bestimmen, dass die als Teilnehmer vorgesehene Vorrichtung der Multimediakonferenz bereits beitritt, die freigegebenen Bildschirmdaten an die als Teilnehmer vorgesehene Vorrichtung sendet, um die als Teilnehmer vorgesehene Vorrichtung dazu zu veranlassen, den freigegebenen Bildschirm auf Basis der freigegebenen Bildschirmdaten anzuzeigen.

2. Verfahren nach Anspruch 1, wobei die Anrufinformationen vom Benutzer über eine angezeigte Eingabesteuerung eingegeben werden.

3. Verfahren nach Anspruch 2, wobei
die Anrufinformationen mindestens eines umfassen von: Vorrichtungsanrufinformationen der als Teilnehmer vorgesehenen Vorrichtung und Kontaktanrufinformationen einer Kontaktperson der als Teilnehmer vorgesehenen Vorrichtung; und
die Eingabesteuerungen mindestens eines umfassen von: einer Eingabesteuerung für die Kontaktanrufinformationen und einer Eingabesteuerung für die Vorrichtungsanrufinformationen.

4. Verfahren nach Anspruch 1, wobei die als Teilnehmer vorgesehene Vorrichtung der Multimediakonferenz beitritt durch:
Anzeigen einer Anrufschnittstelle in Reaktion auf das Empfangen der Anrufanforderung, wobei die Anrufschnittstelle eine Beitrittszustimmungssteuerung zum Zustimmen des Beitritts zur Multimediakonferenz beinhaltet; und
Beitreten zur Multimediakonferenz in Reaktion auf eine Auslöseoperation, die vom Benutzer an der Beitrittszustimmungssteuerung durchgeführt wird.

5. Verfahren nach Anspruch 1, wobei die Multimediakonferenz durch eine vorhandene Vorrichtung, die das Verfahren durchführt, auf der Zielanzeigevorrichtung initiiert wird.

6. Verfahren nach Anspruch 5, wobei die vorhandene Vorrichtung die Multimediakonferenz auf der Zielanzeigevorrichtung initiiert durch:
Senden einer Anforderung zum Initiieren der Multimediakonferenz über den Server an die Zielanzeigevorrichtung in Reaktion auf eine Initiierungsoperation, die die Multimediakonferenz initiiert, um die Zielanzeigevorrichtung dazu zu veranlassen, der Multimediakonferenz auf Basis der Initiierungsanforderung beizutreten.

7. Verfahren nach Anspruch 1, wobei eine vorhandene Vorrichtung, die das Verfahren durchführt, mit der Zielanzeigevorrichtung für die Bildschirmprojektion gekoppelt wird durch:
Anzeigen von Kopplungsinformationen, die anhand eines empfangenen Nahfeldkommunikationssignals bestimmt werden, wobei das Nahfeldkommunikationssignal von einer Anzeigevorrichtung rundgesendet wird und die Kopplungsinformationen zum Koppeln mit der Anzeigevorrichtung für die Bildschirmprojektion verwendet werden; und
Koppeln mit der Zielanzeigevorrichtung für die Bildschirmprojektion in Reaktion auf eine Kopplungsoperation, die den der Zielanzeigevorrichtung entsprechenden Kopplungsinformationen zugeordnet ist.

8. Verfahren nach Anspruch 1, wobei die Zielanzeigevorrichtung der Multimediakonferenz früher beitritt als eine vorhandene Vorrichtung, die das Verfahren durchführt; und
die vorhandene Vorrichtung der Multimediakonferenz beitritt durch:
Anzeigen von Beitrittsaufforderungsinformationen für die Multimediakonferenz in Reaktion auf das Empfangen von Konferenzinformationen der Multimediakonferenz, die vom Server gesendet werden, wobei die Konferenzinformationen in Reaktion auf das Bestimmen, dass die Zielanzeigevorrichtung und die vorhandene Vorrichtung erfolgreich für die Bildschirmprojektion gekoppelt wurden, vom Server an die vorhandene Vorrichtung gesendet werden; und
Beitreten zur Multimediakonferenz in Reaktion auf eine Beitrittszustimmungsoperation, die von einem Benutzer auf Basis der Beitrittsaufforderungsinformationen durchgeführt wird.

9. Verfahren nach Anspruch 1, wobei die Zielteilnehmervorrichtung auf Basis der Anzeige des freigegebenen Bildschirms eine Eingabesteuerung zum Eingeben von Anrufinformationen anzeigt, wobei die Anrufinformationen verwendet werden, um eine als Teilnehmer vorgesehene Vorrichtung anzurufen, damit diese der Multimediakonferenz beitritt.

10. Verfahren nach einem der Ansprüche 1 bis 9, wobei die Zielteilnehmervorrichtung mindestens eines umfasst von:
einer anderen Anzeigevorrichtung als der Zielanzeigevorrichtung; und
einer Endgerätevorrichtung, die der Multimediakonferenz unter Verwendung einer Multimediakonferenzanwendung beitritt.

11. Bildschirmfreigabesystem, umfassend:
eine Endgerätevorrichtung,
einen Server, und
eine Zielteilnehmervorrichtung,
wobei die Endgerätevorrichtung dazu konfiguriert ist, sich mit einer Zielanzeigevorrichtung für die Bildschirmprojektion zu koppeln; in Reaktion auf das Erkennen einer Bildschirmfreigabeoperation freigegebene Bildschirmdaten über einen Server an eine Zielteilnehmervorrichtung an einer Multimediakonferenz zu senden; und
wobei die Zielteilnehmervorrichtung dazu konfiguriert ist, den freigegebenen Bildschirm auf Basis der freigegebenen Bildschirmdaten anzuzeigen;
die Endgerätevorrichtung dazu konfiguriert ist, in Reaktion auf das Empfangen von Anrufinformationen, die von einem Benutzer eingegeben werden, eine Anrufanforderung über den Server an eine als Teilnehmer vorgesehene Vorrichtung, die von den Anrufinformationen angegeben wird, zu senden, um die als Teilnehmer vorgesehene Vorrichtung dazu zu veranlassen, auf Basis der Anrufanforderung der Multimediakonferenz beizutreten; und
der Server dazu konfiguriert ist, in Reaktion auf das Bestimmen, dass die als Teilnehmer vorgesehene Vorrichtung der Multimediakonferenz bereits beitritt, die freigegebenen Bildschirmdaten an die als Teilnehmer vorgesehene Vorrichtung zu senden, um die als Teilnehmer vorgesehene Vorrichtung dazu zu veranlassen, den freigegebenen Bildschirm auf Basis der freigegebenen Bildschirmdaten anzuzeigen.

12. System nach Anspruch 11, wobei die Multimediakonferenz von der Endgerätevorrichtung auf der Zielanzeigevorrichtung initiiert wird;
die Endgerätevorrichtung dazu konfiguriert ist, in Reaktion auf eine Initiierungsoperation, die die Multimediakonferenz initiiert, eine Anforderung zum Initiieren der Multimediakonferenz über den Server an die Zielanzeigevorrichtung zu senden; und
die Zielanzeigevorrichtung dazu konfiguriert ist, der Multimediakonferenz auf Basis der Initiierungsanforderung beizutreten, oder
wobei die Zielanzeigevorrichtung der Multimediakonferenz früher beitritt als die Endgerätevorrichtung;
der Server dazu konfiguriert ist, in Reaktion auf das Bestimmen, dass die Zielanzeigevorrichtung und die Endgerätevorrichtung erfolgreich für die Bildschirmprojektion gekoppelt wurden, Konferenzinformationen der Multimediakonferenz an die Endgerätevorrichtung zu senden; und
die Endgerätevorrichtung dazu konfiguriert ist, in Reaktion auf das Empfangen der Konferenzinformationen Beitrittsaufforderungsinformationen für die Multimediakonferenz anzuzeigen und in Reaktion auf eine Beitrittszustimmungsoperation, die von einem Benutzer auf Basis der Beitrittsaufforderungsinformationen durchgeführt wird, der Multimediakonferenz beizutreten.

13. Computerlesbares Medium, das ein Computerprogramm speichert, wobei das Computerprogramm, wenn es von einem Prozessor ausgeführt wird, bewirkt, dass der Prozessor das Verfahren nach einem der Ansprüche 1 bis 10 durchführt.

## Revendications

1. Procédé de partage d'écran, le procédé est réalisé par un terminal, le procédé comprenant :
le couplage avec un dispositif d'affichage cible pour la projection sur écran ;
en réponse à la détection d'une opération de partage d'écran, l'envoi (601) de données d'écran partagé par le biais d'un serveur à un dispositif participant cible dans une conférence multimédia ;
dans lequel le dispositif participant cible affiche un écran partagé sur la base des données d'écran partagé, dans lequel le dispositif participant cible comprend le dispositif d'affichage cible (602) ;
l'envoi (402), en réponse à la réception d'informations d'appel saisies par un utilisateur, d'une demande d'appel par le biais du serveur à un dispositif futur participant indiqué par les informations d'appel pour amener le dispositif futur participant à rejoindre la conférence multimédia sur la base de la demande d'appel,
dans lequel, en réponse à la détermination du fait que le dispositif futur participant rejoint déjà la conférence multimédia, le serveur envoie les données d'écran partagé au dispositif futur participant pour amener le dispositif futur participant à afficher l'écran partagé sur la base des données d'écran partagé.

2. Procédé selon la revendication 1, dans lequel les informations d'appel sont saisies par l'utilisateur par le biais d'une commande de saisie affichée.

3. Procédé selon la revendication 2, dans lequel
les informations d'appel comprennent au moins l'une parmi : des informations d'appel de dispositif du dispositif futur participant et des informations d'appel de contact d'une personne de contact du dispositif futur participant ; et
les commandes de saisie comprennent au moins l'une parmi : une commande de saisie pour les informations d'appel de contact et une commande de saisie pour les informations d'appel de dispositif.

4. Procédé selon la revendication 1, dans lequel le dispositif futur participant rejoint la conférence multimédia par :
l'affichage d'une interface d'appel en réponse à la réception de la demande d'appel, dans lequel l'interface d'appel inclut une commande d'acceptation de participation permettant d'accepter de rejoindre la conférence multimédia ; et
le fait de rejoindre la conférence multimédia en réponse à une opération de déclenchement réalisée par l'utilisateur sur la commande d'acceptation de participation.

5. Procédé selon la revendication 1, dans lequel la conférence multimédia est initiée sur le dispositif d'affichage cible par un présent dispositif qui réalise le procédé.

6. Procédé selon la revendication 5, dans lequel le présent dispositif initie la conférence multimédia sur le dispositif d'affichage cible par :
l'envoi, en réponse à une opération d'initiation initiant la conférence multimédia, d'une demande d'initiation de la conférence multimédia au dispositif d'affichage cible par le biais du serveur pour amener le dispositif d'affichage cible à rejoindre la conférence multimédia sur la base de la demande d'initiation.

7. Procédé selon la revendication 1, dans lequel un présent dispositif qui réalise le procédé est couplé au dispositif d'affichage cible pour la projection sur écran par :
l'affichage d'informations de couplage déterminées à partir d'un signal de communication en champ proche reçu, dans lequel le signal de communication en champ proche est diffusé par un dispositif d'affichage, et les informations de couplage sont utilisées pour le couplage avec le dispositif d'affichage pour la projection sur écran ; et
le couplage avec le dispositif d'affichage cible pour la projection sur écran, en réponse à une opération de couplage associée aux informations de couplage correspondant au dispositif d'affichage cible.

8. Procédé selon la revendication 1, dans lequel le dispositif d'affichage cible rejoint la conférence multimédia plus tôt qu'un présent dispositif qui réalise le procédé ; et
le présent dispositif rejoint la conférence multimédia par :
l'affichage d'informations d'invite de participation pour la conférence multimédia en réponse à la réception d'informations de conférence de la conférence multimédia envoyées par le serveur, dans lequel les informations de conférence sont envoyées par le serveur au présent dispositif en réponse à la détermination du fait que le dispositif d'affichage cible et le présent dispositif sont couplés avec succès pour la projection sur écran ; et
la participation à la conférence multimédia en réponse à une opération d'acceptation de participation réalisée par un utilisateur sur la base des informations d'invite de participation.

9. Procédé selon la revendication 1, dans lequel le dispositif participant cible affiche, sur la base de l'affichage de l'écran partagé, une commande de saisie pour saisir des informations d'appel, dans lequel les informations d'appel sont utilisées pour appeler un dispositif futur participant à rejoindre la conférence multimédia.

10. Procédé selon l'une quelconque des revendications 1 à 9, dans lequel le dispositif participant cible comprend au moins l'un parmi :
un dispositif d'affichage autre que le dispositif d'affichage cible ; et
un dispositif terminal qui rejoint la conférence multimédia en utilisant une application de conférence multimédia.

11. Système de partage d'écran, comprenant :
un dispositif terminal,
un serveur, et
un dispositif participant cible,
dans lequel le dispositif terminal est configuré pour se coupler à un dispositif d'affichage cible pour la projection sur écran ; en réponse à la détection d'une opération de partage d'écran, envoyer des données d'écran partagé par le biais d'un serveur à un dispositif participant cible dans une conférence multimédia ; et
dans lequel le dispositif participant cible est configuré pour afficher l'écran partagé sur la base des données d'écran partagé ;
le dispositif terminal est configuré pour envoyer, en réponse à la réception d'informations d'appel saisies par un utilisateur, une demande d'appel par le biais du serveur à un dispositif futur participant indiqué par les informations d'appel pour amener le dispositif futur participant à rejoindre la conférence multimédia sur la base de la demande d'appel ; et
le serveur est configuré pour envoyer, en réponse à la détermination du fait que le dispositif futur participant rejoint déjà la conférence multimédia, les données d'écran partagé au dispositif futur participant pour amener le dispositif futur participant à afficher l'écran partagé sur la base des données d'écran partagé.

12. Système selon la revendication 11, dans lequel la conférence multimédia est initiée par le dispositif terminal sur le dispositif d'affichage cible ;
le dispositif terminal est configuré pour envoyer, en réponse à une opération d'initiation initiant la conférence multimédia, une demande d'initiation de la conférence multimédia au dispositif d'affichage cible par le biais du serveur ; et
le dispositif d'affichage cible est configuré pour rejoindre la conférence multimédia sur la base de la demande d'initiation, ou,
dans lequel le dispositif d'affichage cible rejoint la conférence multimédia plus tôt que le dispositif terminal ;
le serveur est configuré pour envoyer des informations de conférence de la conférence multimédia au dispositif terminal en réponse à la détermination du fait que le dispositif d'affichage cible et le dispositif terminal sont couplés avec succès pour la projection sur écran ; et
le dispositif terminal est configuré pour afficher des informations d'invite de participation pour la conférence multimédia en réponse à la réception des informations de conférence et pour rejoindre la conférence multimédia en réponse à une opération d'acceptation de participation réalisée par un utilisateur sur la base des informations d'invite de participation.

13. Support lisible par ordinateur stockant un programme informatique, dans lequel le programme informatique, lorsqu'il est exécuté par un processeur, amène le processeur à réaliser le procédé selon l'une quelconque des revendications 1 à 10.
